# EUROPÄISCHE PATENTSCHRIFT

(11) **EP 4 364 917 B1**
(45) Veröffentlichungstag und Bekanntmachung des Hinweises auf die Patenterteilung: **16.07.2025**
(21) Anmeldenummer: 23206584.7
(22) Anmeldetag: 30.10.2023
(51) Int. Cl.: B23Q 7/00, B27M 1/08, B23Q 7/04

(54) **HOLZBEARBEITUNGSVORRICHTUNG UND VERFAHREN ZUM BEARBEITEN VON PLATTENFÖRMIGEN WERKSTÜCKEN**
WOOD-WORKING DEVICE AND METHOD FOR MACHINING PLANAR WORKPIECES
DISPOSITIF DE TRAITEMENT DU BOIS ET PROCÉDÉ D'USINAGE DE PIÈCES EN FORME DE PLAQUE

(30) Priorität: 04.11.2022 DE 102022129234
(43) Veröffentlichungstag der Anmeldung: 08.05.2024
(73) Patentinhaber: IMA Schelling Deutschland GmbH, 32312 Lübbecke (DE)
(72) Erfinder: Meier, Daniel, 32339 Espelkamp (DE); Hopmann, Chris, 32609 Hüllhorst (DE)
(74) Vertreter: Schober, Mirko

(56) Entgegenhaltungen:
- EP-B1- 1 985 425

## Beschreibung

Die Erfindung betrifft eine Holzbearbeitungsvorrichtung nach dem Oberbegriff von Anspruch 1. Ferner betrifft die Erfindung ein Verfahren zum Bearbeiten von plattenförmigen Werkstücken.

Holzbearbeitungsvorrichtungen sind beispielsweise aus DE 198 43 003 A1 bekannt. Hier wird ein Werkstück im Durchlauf auf einer Rollenbahn durch eine Bearbeitungseinheit geschoben. Auch gibt es entsprechende Vorrichtungen, bei denen das Werkstück auf Fördergurten bewegt wird, EP 1 338 381 A2 und DE 20 2015 008 745 U1, oder bei denen die Werkstücke in Fördertaschen gehalten werden, die an einer Führungsbahn geführt sind, DE 10 2007 028 786 A1. Aus DE 100 26 069 A1 ist ein Bearbeitungszentrum für plattenförmige Werkstücke bekannt, welches ein in mehrere Raumrichtungen bewegliches Bearbeitungswerkzeug aufweist.

Bei der Verarbeitung von plattenförmigen Werkstücken aus Holz oder Holzersatzstoffen werden diese häufig beispielsweise über eine Kettenbahn durch eine Durchlaufmaschine gefördert und bearbeitet. Eine Durchlaufmaschine mit Kettenbahn ist beispielsweise aus DE 199 21 058 C1 bekannt. Ebenso beschreibt EP 2 168 714 A1 eine Durchlaufmaschine, in der die Werkstücke an Spannelementen gehalten durch die Anlage bewegt werden. Ein Mehrfachbohrkopf wird hier als Bearbeitungsaggregat eingesetzt, um ein vorgegebenes Bohrbild in die Werkstücke einzubringen.

Weiterer Stand der Technik wird in der EP 1 985 425 B offenbart.

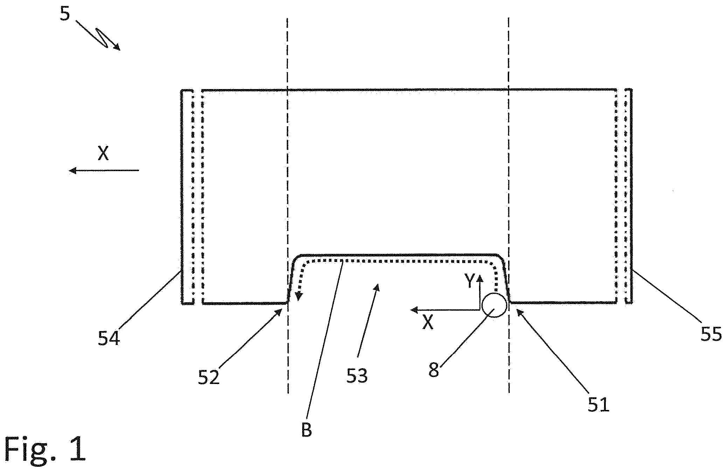

Ein beispielhafter Vorgang ist in Figur 1 skizziert. Die erforderlichen Bearbeitungsschritte erfordern, dass im Durchlauf in einer Durchlaufrichtung X ein entsprechendes Bearbeitungsaggregat mit einem Bearbeitungswerkzeug 8 mit dem Werkstück 5, welches mit der vorauslaufenden Kante 54 und der nachlaufenden Kante 55 ebenfalls in Durchlaufrichtung X bewegt wird, mitgeführt wird. Dies erfordert bereits eine hohe Präzision bei der Ansteuerung der Aggregate, da die Bewegung des Werkstücks 5 mit der Bewegung des Bearbeitungswerkzeugs 8 synchronisiert werden muss. Die Bewegungsbahn des Bearbeitungswerkzeugs 8 ist durch die Line B in Figur 1 dargestellt. Zum Herstellen einer Griffmulde 53 wird das Bearbeitungswerkzeug 8 in Zustellrichtung Y und synchron mit dem Werkstück 5 in Durchlaufrichtung X bewegt. Dabei wird das Werkstück 5 bearbeitet, sodass zwischen den Kanten 51 und 52 eine Griffmulde 53 entsteht. Hierbei handelt es sich um einen beispielhaften Bearbeitungsvorgang, etwa durch Fräsen. Das im Folgenden geschilderte Problem kommt aber auch bei anderen Bearbeitungsformen und nicht nur an Schmalseiten des Werkstücks 5 vor.

Es hat sich nämlich gezeigt, dass trotz aufwendiger Steuerungen die Bearbeitungsqualität nicht immer dem gewünschten Ergebnis entspricht. So kommt es beispielsweise bei Ausfräsungen von Griffmulden in Schmalseiten der plattenförmigen Werkstücke dazu, dass sich sogenannte "Rattermarken" im Werkstück ausbilden. Das sind Unebenheiten am Werkstück, die vor allem damit zu tun haben, dass die Werkstücke während des Bearbeitungsvorgangs auf einer Kettenbahn oder einer anderen Unterlage liegen. Gerade bei Kettenbahnen macht sich hier der sogenannte Polygoneffekt bemerkbar, der durch das Umlenken der Kettenglieder am Anfang und am Ende der Kettenbahn erfolgt.

Aufgabe der vorliegenden Erfindung ist es daher, eine Holzbearbeitungsvorrichtung und ein entsprechendes Verfahren zur Bearbeitung von plattenförmigen Werkstücken anzugeben, mit deren Hilfe sich das Auftreten solcher "Rattermarken" oder sonstiger aufgrund der verwendeten Unterlage auftretender Ungenauigkeiten beim Bearbeitungsvorgang verhindern oder zumindest reduzieren lässt.

Gelöst wird diese Aufgabe durch eine Holzbearbeitungsvorrichtung mit den Merkmalen des Anspruchs 1 sowie ein Verfahren mit den Merkmalen des Anspruchs 9. Vorteilhafte Ausführungsformen finden sich in den jeweiligen Unteransprüchen.

Die Erfindung besteht im Wesentlichen darin, das Werkstück und die das Werkstück durch die Holzbearbeitungsvorrichtung in einer Durchlaufrichtung transportierende Transportvorrichtung für den Bearbeitungsvorgang voneinander zu entkoppeln. Dadurch kommt es nicht zu durch die Transportvorrichtung bedingten Ungenauigkeiten während der Bearbeitung, sodass beispielsweise Rattermarken vermieden werden können. Erfindungsgemäß wird dies dadurch erreicht, dass eine Festhalteeinrichtung dazu ausgelegt ist, den Kontakt mit der Transportvorrichtung zumindest für den Bearbeitungsvorgang aufzuheben.

Hierzu ist die erfindungsgemäße Holzbearbeitungsvorrichtung in Gestalt einer Durchlaufmaschine mit einer in einer Durchlaufrichtung beweglichen Transportvorrichtung, bevorzugt Kettenbahn, ausgebildet, mit der ein, bevorzugt plattenförmiges, Werkstück aus Holz oder Holzersatzstoff zum Transport parallel zur Durchlaufrichtung in Kontakt gebracht werden kann. Ferner weist die Holzbearbeitungsvorrichtung ein parallel zur Durchlaufrichtung bewegliches Bearbeitungsaggregat, bevorzugt Fräsaggregat, zum Bearbeiten des Werkstücks beim Durchlaufen der Durchlaufmaschine in Durchlaufrichtung auf.

Erfindungsgemäß weist die Holzbearbeitungsvorrichtung weiter eine parallel zur Durchlaufrichtung bewegliche Festhalteeinrichtung auf, die dazu ausgelegt ist, ein in, bevorzugt reibschlüssigem, Kontakt mit der Transportvorrichtung befindliches Werkstück festzuhalten, dadurch den Kontakt zwischen Werkstück und Transportvorrichtung zu lösen und im festgehaltenen Zustand parallel zur Durchlaufrichtung zu transportieren.

Durch die Lösung des Kontaktes und das separate Festhalten des Werkstücks wird dieses für den Bearbeitungsvorgang von der Transportvorrichtung entkoppelt. Negative Einflüsse der Transportvorrichtung, z. B. der Polygoneffekt, spielen somit für die Bearbeitung des Werkstücks keine Rolle mehr. Die Transportvorrichtung ist eine Kettenbahn.

Ferner weist die erfindungsgemäße Holzbearbeitungsvorrichtung auch eine Oberdruckeinrichtung auf, die mit der Transportvorrichtung derart zusammenwirkt, dass sie das Werkstück auf die Kettenbahn, drückt. Diese Oberdruckeinrichtung, die beispielsweise einen Oberdruckriemen umfassen kann, kann erfindungsgemäß in der Lage sein, dem durch die Festhalteeinrichtung aus dem Kontakt mit der Transportvorrichtung gelösten Werkstück auszuweichen. Dies kann beispielsweise dadurch geschehen, dass ein durch die Festhalteeinrichtung angehobenes Werkstück gegen die Oberdruckeinrichtung verlagert wird, und die Oberdruckeinrichtung entsprechend nachgibt oder so angesteuert wird, dass sie dem angehobenen Werkstück ausweicht.

Bevorzugt ist vorgesehen, dass die Festhalteeinrichtung dazu ausgelegt ist, ein auf der Transportvorrichtung aufliegendes Werkstück von dieser abzuheben, festzuhalten und im festgehaltenen Zustand parallel zur Durchlaufrichtung zu transportieren. Auf diese Weise wird das Werkstück sicher in einer definierten Aufspannung gehalten und kann während des Bearbeitungsvorganges auch nicht verrutschen.

Nach einer weiteren bevorzugten Ausführungsform ist die Festhalteeinrichtung dazu ausgelegt, den Kontakt zwischen dem festgehaltenen Werkstück und der Transportvorrichtung wiederherzustellen, bevorzugt das festgehaltene Werkstück wieder auf der Transportvorrichtung abzulegen.

Die Festhalteeinrichtung kann grundsätzlich auf unterschiedliche Weise ausgebildet sein. Um die Synchronisierung mit dem Bearbeitungsaggregat zu vereinfachen, kann vorgesehen sein, dass die Festhalteeinrichtung einen auf einem Maschinenbett parallel zur Durchlaufrichtung verschieblichen Schlitten umfasst. An diesem Schlitten kann beispielsweise auch das entsprechende Bearbeitungsaggregat angeordnet sein, natürlich ist es auch möglich, das Bearbeitungsaggregat separat von einem solchen Schlitten in Durchlaufrichtung zu bewegen.

Nach einer weiteren Ausführungsform kann vorgesehen sein, dass die Festhalteeinrichtung wenigstens eine, bevorzugt wenigstens zwei, Greifeinrichtung(en) umfasst, die dazu ausgelegt ist/ sind, ein mit der Transportvorrichtung in Kontakt befindliches, z. B. darauf liegendes, Werkstück zu greifen. Die Greifeinrichtung(en) ist/sind dabei parallel zu einer zur Durchlaufrichtung senkrecht verlaufenden Vertikalrichtung verschiebbar, um ein gegriffenes Werkstück aus dem Kontakt mit der Transportvorrichtung zu lösen, bzw. das Werkstück abzuheben, und/oder den genannten Kontakt wieder herzustellen bzw. auf die Transportvorrichtung aufzulegen. Für das Lösen des Kontaktes kann insbesondere vorgesehen sein, dass die wenigstens eine Greifeinrichtung in der Lage ist, das Werkstück von der durch die Transportvorrichtung definierten Transportebene beispielsweise in einer Vertikalrichtung (Z-Richtung) zu bewegen.

Eine beispielhafte Ausführungsform sieht vor, dass die wenigstens eine Greifeinrichtung über wenigstens zwei Klemmbacken zur Anlage an der Oberseite bzw. der Unterseite des Werkstücks verfügt.

Bevorzugt kann vorgesehen sein, dass die wenigstens eine Greifeinrichtung an dem oben genannten Schlitten gelagert ist.

Das Bearbeitungsaggregat ist bevorzugt in wenigstens zwei Raumrichtungen, bevorzugt in drei Raumrichtungen verschieblich ausgebildet. Dabei kann das Bearbeitungsaggregat mit dem oben genannten Schlitten verfahrbar gekoppelt sein. Auch ist es möglich, dass das Bearbeitungsaggregat so eingerichtet ist, dass es von der Bewegung der Transportvorrichtung entkoppelt ist, sich also unabhängig von der Transportvorrichtung bewegen lässt. Nach einer bevorzugten Ausführungsform ist das Bearbeitungsaggregat in räumlicher Nähe zur Festhalteeinrichtung angeordnet. Dadurch werden etwaige Ungenauigkeiten in der Positionierung beider Komponenten zueinander minimiert. Bevorzugt umfasst das Bearbeitungsaggregat ein Fräsaggregat, es können allerdings auch andere Bearbeitungen durch die Bearbeitungsvorrichtung vorgenommen werden, z. B. Gravieren, Drucken, Schleifen. Auch ist die Bearbeitung nicht auf die Schmalseite des Werkstücks beschränkt, sondern kann an jeder Position des Werkstücks erfolgen.

Ferner kann eine Tastvorrichtung in der erfindungsgemäßen Holzbearbeitungsvorrichtung vorgesehen sein. Mittels dieser Tastvorrichtung ist es möglich, eine definierte Position des Werkstücks zum Zeitpunkt des Lösens des Werkstücks aus dem Kontakt mit der Transportvorrichtung zu bestimmen. Die Maschinensteuerung ist dann in der Lage, abhängig von dieser festgestellten Position und der Bewegung der Festhalteeinrichtung jederzeit die Position des Werkstücks in der Holzbearbeitungsvorrichtung zu erfassen. Bevorzugt ist die Tastvorrichtung am Schlitten angeordnet, sodass sie zusammen mit dem Schlitten verfahrbar ist.

Beim erfindungsgemäßen Verfahren werden, bevorzugt plattenförmige, Werkstücke aus Holz oder Holzersatzstoffen, bevorzugt spanend, im Durchlauf in einer Durchlaufrichtung mittels eines sich parallel zur Durchlaufrichtung mit dem Werkstück mitbewegenden Bearbeitungsaggregat bearbeitet. Bevorzugt wird die Schmalseite des Werkstücks bearbeitet, dies ist aber nicht zwingend erforderlich. Auch die Bearbeitung der Breitseiten bzw. Flächenseiten ist denkbar. Beim erfindungsgemäßen Verfahren kann bevorzugt eine oben beschriebene Holzbearbeitungsvorrichtung eingesetzt werden. Im Rahmen des erfindungsgemäßen Verfahrens werden folgende Schritte ausgeführt,
a) in Kontakt bringen, bevorzugt Auflegen, eines zu bearbeitenden Werkstücks mit der Transportvorrichtung einer Durchlaufmaschine und Transportieren des Werkstücks auf der Transportvorrichtung in Durchlaufrichtung;
b) Festhalten des Werkstücks mittels einer Festhalteeinrichtung;
c) Lösen des Kontakts des Werkstücks mit der Transportvorrichtung, so dass das festgehaltene Werkstück nicht mehr mit dieser in Kontakt ist, bevorzugt nicht mehr auf der Transportvorrichtung aufliegt;
d) Transportieren des Werkstücks parallel, und insbesondere synchron zur Bewegung der Kettenbahn, in Durchlaufrichtung und gleichzeitiges Bearbeiten des Werkstücks durch das parallel zur Durchlaufrichtung, insbesondere synchron, mit dem Werkstück mitlaufende Bearbeitungsaggregat.

Dabei kann bevorzugt vorgesehen sein, dass nach dem Schritt d) der Kontakt zwischen Transportvorrichtung und Werkstück wiederhergestellt wird. Weiter kann bevorzugt vorgesehen sein, dass das Werkstück von der Festhalteeinrichtung wieder auf der Transportvorrichtung abgelegt wird.

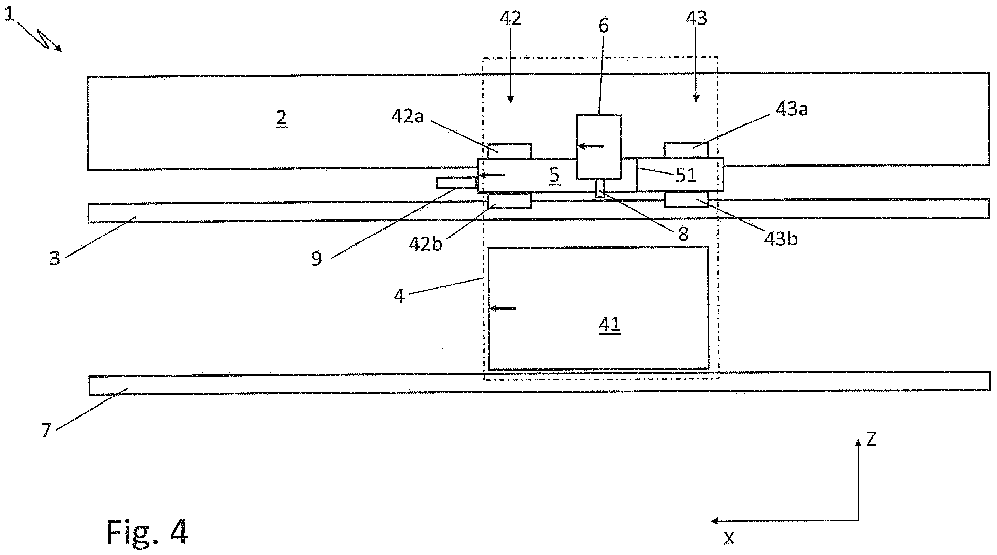

Die Erfindung wird nachfolgend anhand der Figuren 1 bis 6 näher erläutert.
Figur 1 zeigt eine Draufsicht auf ein Werkstück, welches mit einem Bearbeitungsaggregat bearbeitet wird.
Figur 2 zeigt eine Seitenansicht einer erfindungsgemäßen Vorrichtung in einer ersten Betriebsposition.
Figur 3 zeigt die Seitenansicht der erfindungsgemäßen Vorrichtung in einer zweiten Betriebsposition.
Figur 4 zeigt die Seitenansicht der erfindungsgemäßen Vorrichtung in einer dritten Betriebsposition.
Figur 5 zeigt die Seitenansicht der erfindungsgemäßen Vorrichtung in einer vierten Betriebsposition.
Figur 6 zeigt die Seitenansicht der erfindungsgemäßen Vorrichtung in einer fünften Betriebsposition.

Die Abbildung gemäß Fig. 1 wurde bereits oben erläutert, sodass zur Vermeidung von Wiederholungen auf die obigen Ausführungen verwiesen wird. Auch nach dem erfindungsgemäßen Verfahren erfolgt grundsätzlich eine synchronisierte Bewegung zwischen Bearbeitungsaggregat 8 und Werkstück 5.

Es wird darauf hingewiesen, dass die nun beschriebene Bearbeitung lediglich beispielhaft eine Bearbeitung der Schmalseite des Werkstücks 5 beschreibt. Genauso gut können auch Flächenseiten des Werkstücks 5 mit dem erfindungsgemäßen Verfahren bearbeitet werden.

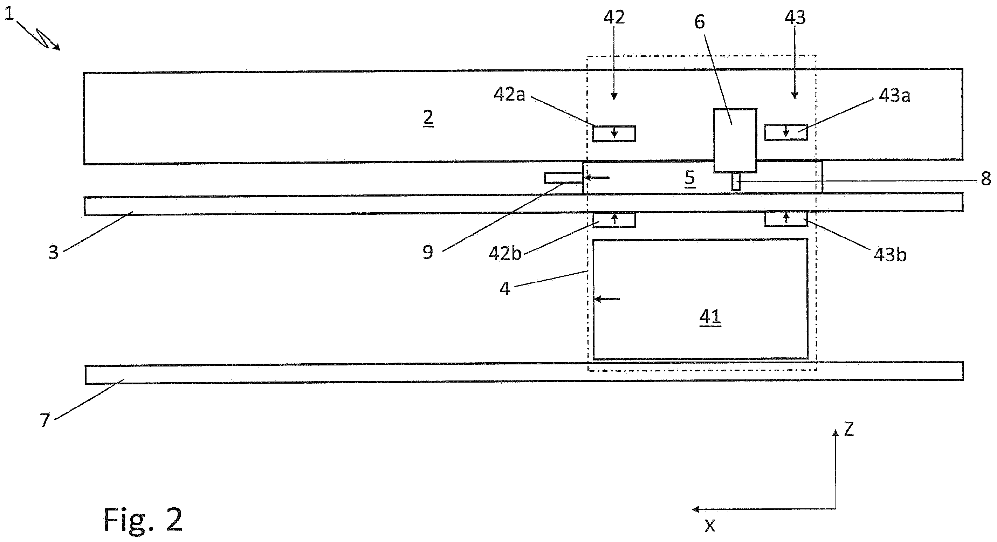

In der in den folgenden Figuren, z. B. Fig. 2, dargestellten Seitenansicht der erfindungsgemäßen Holzbearbeitungsvorrichtung 1 bezeichnet 7 ein Maschinenbett, 3 eine Transportvorrichtung, die bevorzugt als Kettenbahn ausgebildet ist, 2 eine Oberdruckeinrichtung, die dafür sorgt, dass das Werkstück 5 zwischen dieser und der Transportvorrichtung 3 gehalten wird und nicht verrutscht. 6 bezeichnet ein Bearbeitungsaggregat, welches wenigstens ein Bearbeitungswerkzeug 8 trägt. Mit 4 ist die erfindungsgemäße Festhalteeinrichtung beschrieben, welche im gezeigten Beispiel einen auf dem Maschinenbett 7 in Laufrichtung X beweglichen Schlitten 41 aufweist. An dem Schlitten 41 ist mit diesem gemeinsam eine in Durchlaufrichtung X verfahrbare Einrichtung angeordnet, mit deren Hilfe ein auf der Transportvorrichtung oder im Kontakt mit der Transportvorrichtung 3 befindliches Werkstück 5 aus dem Kontakt mit der Transportvorrichtung gelöst werden kann.

Bevorzugt ist die genannte Einrichtung eine Greifeinrichtung, welche z. B. wenigstens einen Greifer 42, 43 mit Klemmbacken 42a, 42b bzw. 43a, 43b aufweist. Nach einer bevorzugten Ausführungsform ist die genannte Einrichtung so ausgebildet, dass sie sich in Vertikalrichtung Z (senkrecht zur Aufstellebene des Maschinenbetts 7) bewegen lässt. Ein so von der Einrichtung fixiertes Werkstück 5 kann also dann angehoben und abgesenkt werden.

Die hier als Greifeinrichtung ausgebildete Einrichtung fährt also mit dem Schlitten 41 in Durchlaufrichtung X mit. In den Figuren ist am Schlitten 41 der Festhalteeinrichtung bevorzugt ein Anschlag 9 angeordnet. Dieser Anschlag 9 dient als Referenzpunkt zur Bestimmung einer Referenzposition, damit die Maschinensteuerung (nicht gezeigt) weiß, an welcher Stelle das Werkstück 5 von der Festhalteeinrichtung 4 übernommen wird.

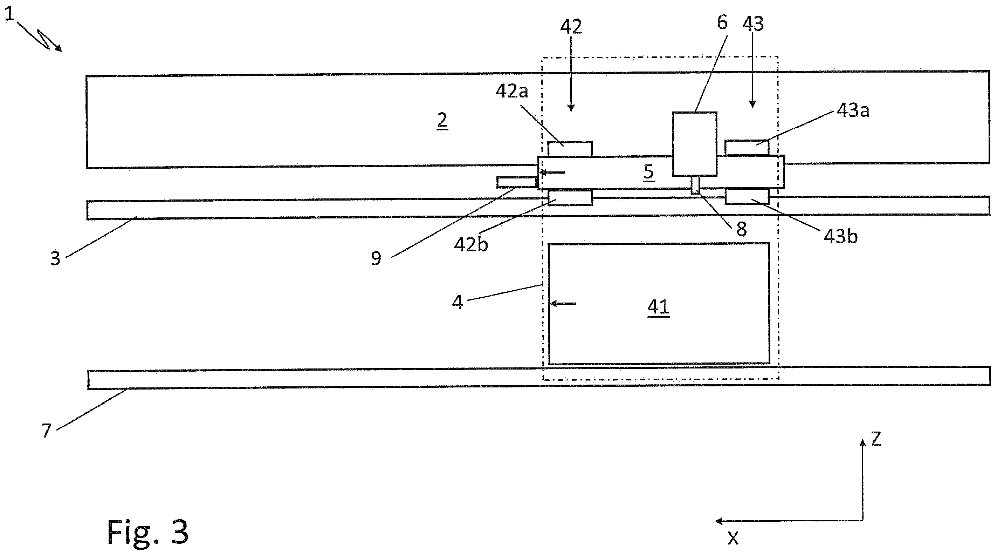

Ist ein Bearbeitungsschritt über das Bearbeitungsaggregat 6 vorgesehen, geschieht nun folgendes: Das Werkstück 5 wird in Durchlaufrichtung X bewegt, das Bearbeitungsaggregat 6 bewegt sich mit dem Werkstück 5, insbesondere mit derselben Geschwindigkeit, in X-Richtung mit. Entweder ist das Bearbeitungsaggregat 6 am Schlitten 41 angeordnet oder separat von diesem beweglich. Kurz vor dem Beginn der Bearbeitung, im Beispiel der Fig. 1 der Bewegung des Bearbeitungsaggregats 6 mit dem Werkzeug 8 in Zustellrichtung Y (bevorzugt senkrecht zu X und Z) wird die erfindungsgemäße Festhalteeinrichtung 4 aktiviert. Dies geschieht bevorzugt, wenn das Werkstück 5 gegen den Anschlag 9 der Festhalteeinrichtung läuft. Dies kann als Startsignal für die Festhalteeinrichtung 4 dienen, die bei Auflaufen des Werkstücks 5 auf den Anschlag 9 dann den Festhaltevorgang (beispielsweise durch Greifen über Greifeinrichtungen 42, 43) beginnt. Dazu wird die Festhalteeinrichtung 4 durch Bewegung des Schlittens 41 synchron mit dem Werkstück 5 in Durchlaufrichtung X mit dem Werkstück 5 in Eingriff gebracht. Diese Situation ist in Fig. 3 dargestellt, dort sind die Klemmbacken 42a, 42b bzw. 43a, 43b an das Werkstück 5 an der Oberseite und der Unterseite angelegt und klemmen das Werkstück 5 fest. Auf diese Weise kann das Werkstück nun in Richtung Z angehoben werden, in Fig. 3 dargestellt, man erkennt den Zwischenraum zwischen Werkstück 5 und der Transportvorrichtung 3.

Nun beginnt der eigentliche Bearbeitungsvorgang, wobei die Festhalteeinrichtung 4 sich mit dem Werkstück 5 synchron in Durchlaufrichtung X weiterbewegt und das Bearbeitungsaggregat 8 nun den Bearbeitungsvorgang starten kann. Man erkennt hier bereits die Kante 51 der noch auszubildenden Griffmulde.

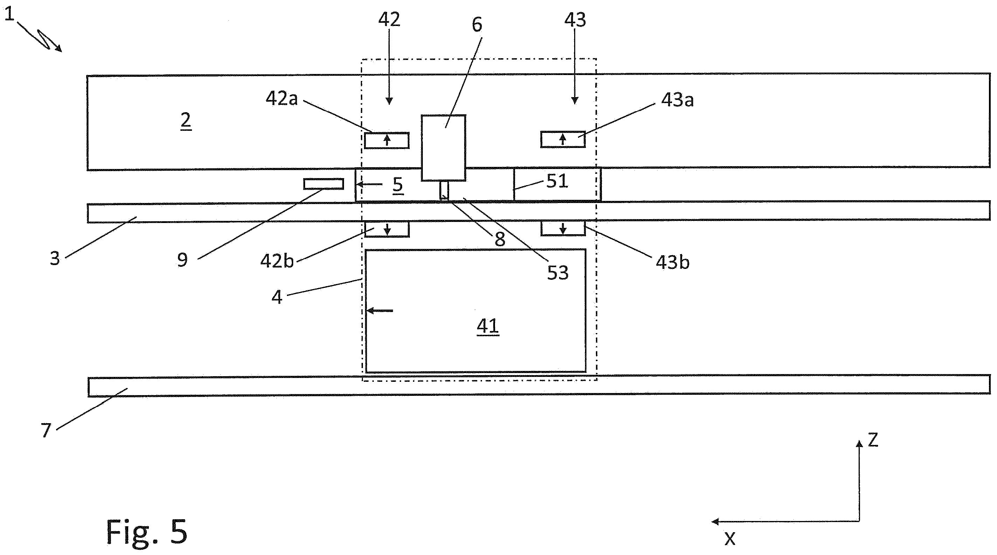

Ist der Bearbeitungsvorgang abgeschlossen, dieser Vorgang ist in Fig. 5 dargestellt, wird das Werkstück 5 wieder aus dem Eingriff mit der Festhalteeinrichtung 4 gelöst, wenn das Werkstück 5 nicht mehr am Anschlag 9 anliegt, und wieder mit der Transportvorrichtung 3 in Kontakt gebracht, im gezeigten Beispiel auf der Transportvorrichtung 3 abgelegt.

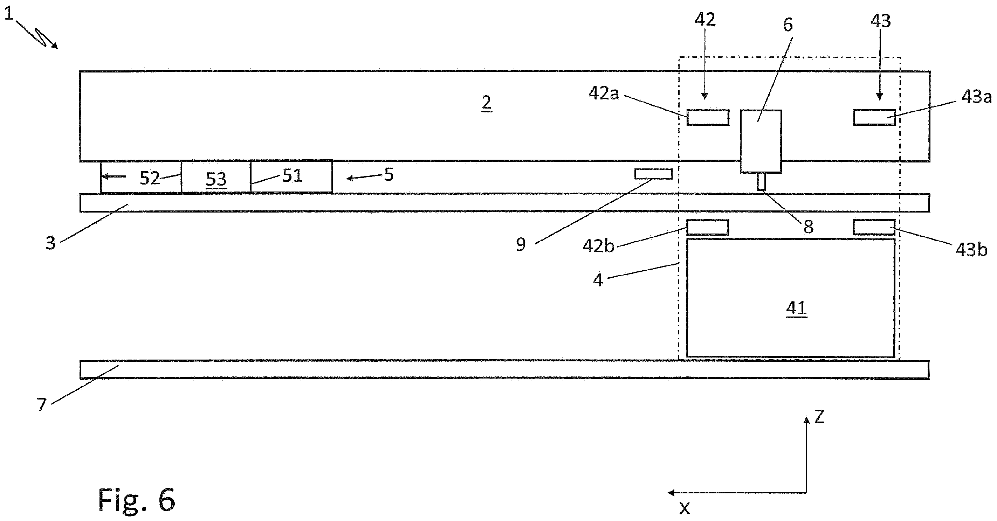

Das fertige Werkstück 5 wird, wie in Fig. 6 dargestellt, dann weiter in Durchlaufrichtung X aus der Holzbearbeitungsvorrichtung 1 ausgefördert. Die Festhalteeinrichtung 4 wird dann entgegen der Durchlaufrichtung X an den Ausgangspunkt zurückgeführt und kann das nächste zu bearbeitende Werkstück übernehmen.

## Patentansprüche

1. Holzbearbeitungsvorrichtung (1) in Gestalt einer Durchlaufmaschine mit einer in einer Durchlaufrichtung (X) beweglichen Kettenbahn (3), mit der ein, insbesondere plattenförmiges, Werkstück (5) aus Holz oder Holzersatzstoff zum Transport parallel zur Durchlaufrichtung (X) in Kontakt gebracht werden kann, einer Oberdruckeinrichtung (2), die mit der Kettenbahn derart zusammenwirkt, dass sie das Werkstück auf die Kettenbahn drückt, sowie einem parallel zur Durchlaufrichtung (X) beweglichen Bearbeitungsaggregat (6), insbesondere Fräsaggregat, zum Bearbeiten des Werkstücks (5) beim Durchlaufen der Durchlaufmaschine in Durchlaufrichtung (X),
wobei die Holzbearbeitungsvorrichtung (1) weiter eine parallel zur Durchlaufrichtung (X) bewegliche Festhalteeinrichtung (4) aufweist, die dazu ausgelegt ist, ein in, bevorzugt reibschlüssigem, Kontakt mit der Kettenbahn (3) befindliches Werkstück (5) festzuhalten, dadurch den Kontakt zwischen Werkstück (5) und Kettenbahn (3) zu lösen und im festgehaltenen Zustand parallel zur Durchlaufrichtung (X) zu transportieren.

2. Holzbearbeitungsvorrichtung (1) nach Anspruch 1,
**dadurch gekennzeichnet,**
**dass** die Festhalteeinrichtung (4) dazu ausgelegt ist, ein auf der Kettenbahn (3) aufliegendes Werkstück (5) von dieser abzuheben, festzuhalten und im festgehaltenen Zustand parallel zur Durchlaufrichtung (X) zu transportieren.

3. Holzbearbeitungsvorrichtung (1) nach Anspruch 1 oder 2,
**dadurch gekennzeichnet,**
**dass** die Festhalteeinrichtung (4) weiter dazu ausgelegt ist, den Kontakt zwischen dem festgehaltenen Werkstück (5) und der Kettenbahn (3) wiederherzustellen, bevorzugt das festgehaltene Werkstück (5) wieder auf der Kettenbahn (3) abzulegen.

4. Holzbearbeitungsvorrichtung (1) nach einem der vorigen Ansprüche,
**dadurch gekennzeichnet,**
**dass** die Festhalteeinrichtung (4) einen auf einem Maschinenbett (7) parallel zur Durchlaufrichtung (X) verschieblichen Schlitten (41) umfasst.

5. Holzbearbeitungsvorrichtung (1) nach einem der vorigen Ansprüche,
**dadurch gekennzeichnet,**
**dass** die Festhalteeinrichtung (4) wenigstens eine, bevorzugt wenigstens zwei, Greifeinrichtung(en) (42, 43) umfasst, die dazu ausgelegt ist/sind, ein in Kontakt mit der Kettenbahn (3) befindliches, bevorzugt darauf liegendes, Werkstück (5) zu greifen, und die parallel zu einer zur Durchlaufrichtung (X) senkrecht verlaufenden Vertikalrichtung (Z) verschiebbar sind, um ein gegriffenes Werkstück (5) aus dem Kontakt mit der Kettenbahn (3) zu lösen, bevorzugt dieses abzuheben, und/ oder es wieder in Kontakt mit der Kettenbahn (3) zu bringen, bevorzugt auf diese aufzulegen.

6. Holzbearbeitungsvorrichtung (1) nach Anspruch 5,
**dadurch gekennzeichnet,**
**dass** die wenigstens eine Greifeinrichtung (42, 43) über wenigstens zwei Klemmbacken (42a, 42b; 43a, 43b) zur Anlage an der Oberseite bzw. der Unterseite des Werkstücks (5) verfügt.

7. Holzbearbeitungsvorrichtung (1) nach Anspruch 4 und einem der Ansprüche 5 oder 6,
**dadurch gekennzeichnet,**
**dass** die wenigstens eine Greifeinrichtung (42, 43) am Schlitten (41) gelagert ist.

8. Holzbearbeitungsvorrichtung (1) nach einem der vorigen Ansprüche,
**dadurch gekennzeichnet,**
**dass** das Bearbeitungsaggregat in wenigstens zwei Raumrichtungen (X, Y), bevorzugt in drei Raumrichtungen (X, Y, Z) verschieblich ist.

9. Verfahren, bei welchem, bevorzugt plattenförmige, Werkstücke (5) aus Holz oder Holzersatzstoffen, bevorzugt spanend, im Durchlauf in einer Durchlaufrichtung (X) mittels eines sich parallel zur Durchlaufrichtung (X) mit dem Werkstück (5) mitbewegenden Bearbeitungsaggregats (6) bearbeitet werden, wobei insbesondere eine Holzbearbeitungsvorrichtung (1) nach einem der vorigen Ansprüche eingesetzt wird und wobei folgende Schritte ausgeführt werden,
a) in Kontakt bringen, bevorzugt Auflegen, eines zu bearbeitenden Werkstücks (5) mit der Kettenbahn (3) einer Durchlaufmaschine und Transportieren des Werkstücks (5) auf der Kettenbahn (3) in Durchlaufrichtung (X), wobei eine Oberdruckeinrichtung (2) das Werkstück (5) auf die Kettenbahn drückt;
b) Festhalten des Werkstücks (5) mittels einer Festhalteeinrichtung (4);
c) Lösen des Kontakts des Werkstücks (5) mit der Kettenbahn (3), so dass das festgehaltene Werkstück (5) nicht mehr mit dieser in Kontakt ist, bevorzugt nicht mehr auf der Kettenbahn (3) aufliegt;
d) Transportieren des Werkstücks (5) parallel, und insbesondere synchron zur Bewegung der Kettenbahn (3), in Durchlaufrichtung (X) und gleichzeitiges Bearbeiten des Werkstücks (5) durch das parallel zur Durchlaufrichtung (X), insbesondere synchron, mit dem Werkstück (5) mitlaufende Bearbeitungsaggregat (6).

10. Verfahren nach Anspruch 9,
**dadurch gekennzeichnet,**
**dass** nach dem Schritt d) der Kontakt zwischen Kettenbahn (3) und Werkstück (5) wiederhergestellt wird, bevorzugt, dass das Werkstück (5) von der Festhalteeinrichtung (4) wieder auf der Kettenbahn (3) abgelegt wird.

## Claims

1. Wood processing device (1) in the form of a throughfeed machine having a chain conveyor (3) capable of moving in a throughfeed direction (X), with which a, in particular, plate-shaped workpiece (5) of wood or wood substitutes can be brought into contact for transport parallel to the throughfeed direction (X), an upper pressing unit (2) which interacts with the chain conveyor in such a way that it presses the workpiece onto the chain conveyor, as well as having a machining assembly (6), in particular a milling assembly, which is capable of moving parallel to the throughfeed direction (X) for processing the workpiece (5) as it passes through the throughfeed machine in the throughfeed direction (X),
wherein the wood processing device (1) further has a securing holding unit (4) which is capable of moving parallel to the throughfeed direction (X) and which is configured to securely hold a workpiece (5), which is in contact with, preferably in friction-bonding contact with, the chain conveyor, to thereby release the contact between the workpiece (5) and the chain conveyor (3) and to transport the workpiece in the secured state parallel to the throughfeed direction (X).

2. Wood processing device (1) according to Claim 1
**characterised in**
**that** the securing holding unit (4) is configured to lift a workpiece (5) resting on the chain conveyor (3) away from same, securely hold the workpiece and to transport it in the secured state parallel to the throughfeed direction (X).

3. Wood processing device (1) according to Claim 1 or 2
**characterised in**
**that** the securing holding unit (4) is further configured to restore the contact between the securely held workpiece (5) and the chain conveyor (3), preferably to place the securely held workpiece (5) back onto the chain conveyor (3) again.

4. Wood processing device (1) according to one of the preceding claims **characterised in**
**that** the securing holding unit (4) comprises a slide carriage (41) capable of moving on a machine bed (7) parallel to the throughfeed direction (X).

5. Wood processing device (1) according to one of the preceding claims **characterised in**
**that** the securing holding unit (4) comprise at least one, preferably at least two, gripper devices (42, 43) which is/are configured to grip a workpiece (5) located in contact with and preferably lying on the chain conveyor (3), and which is/are capable of moving parallel to a vertical direction (Z) running perpendicular to the throughfeed direction (X), in order to release, preferably lift, a gripped workpiece (5) away from its contact with the chain conveyor (3), and/or to bring it back again into contact with the chain conveyor (3), preferably to place it back onto the chain conveyor.

6. Wood processing device (1) according to Claim 5
**characterised in**
**that** the at least one gripper device (42, 43) has at least two clamping jaws (42a, 42b; 43a, 43b) for bearing on the upper side and underneath side respectively of the workpiece (5).

7. Wood processing device (1) according to Claim 4 and one of Claims 5 or 6 **characterised in**
**that** the at least one gripper device (42, 43) is mounted on the slide carriage (41).

8. Wood processing device (1) according to one of the preceding claims **characterised in**
**that** the machining assembly is capable of moving in at least two spatial directions (X, Y), preferably in three spatial directions (X, Y, Z).

9. Method in which preferably planar workpieces (5) of wood or wood substitutes, are machined, preferably in stock-removing manner, in continuous flow in a throughfeed direction (X) by means of a machining assembly (6) which moves along with the workpiece (5) parallel to the throughfeed direction (X), wherein in particular a wood processing device (1) according to one of the preceding claims is used, and wherein the following steps are executed:
a) bringing a workpiece (5), that is to be machined, into contact with, preferably placing it on, the chain conveyor (3) of a throughfeed machine and transporting the workpiece (5) on the chain conveyor (3) in the throughfeed direction (X), wherein an upper pressing unit (2) presses the workpiece (5) onto the chain conveyor;
b) securely holding the workpiece (5) by means of a securing holding unit (4);
c) releasing the contact of the workpiece (5) with the chain conveyor (3) so that the securely held workpiece (5) is no longer in contact with the latter, preferably no longer rests on the chain conveyor (3);
d) transporting the workpiece (5) parallel to, and in particular in synchronization with, the movement of the chain conveyor (3), in the throughfeed direction (X) and simultaneously machining the workpiece (5) using the machining assembly (6) which runs, in particular in synchronization, with the workpiece (5) parallel to the throughfeed direction (X).

10. Method according to Claim 9
**characterised in**
**that** after step d) the contact between the chain conveyor (3) and the workpiece (5) is restored, preferably wherein the workpiece (5) is placed back again onto the chain conveyor (3) by the securing holding unit (4).

## Revendications

1. Dispositif de traitement du bois (1) sous forme d'un appareil de traitement en continu comprenant un convoyeur à chaîne (3) mobile dans une direction de passage (X) avec lequel une pièce, surtout en forme de plaque, en bois ou produit de substitution du bois peut être mise en contact pour un transport en parallèle à la direction de passage (X), un moyen de pression supérieure (2) coopérant avec le convoyeur à chaîne (3) de sorte qu'il presse la pièce sur le convoyeur à chaîne (3) ainsi qu'une unité de traitement (6) mobile parallèle à la direction de passage (X), surtout une unité de fraisage, pour traiter la pièce lors du passage de l'appareil de traitement en continu dans la direction de passage (X),
dans lequel le dispositif de traitement du bois (1) comporte en outre un moyen de retenue (4) mobile en parallèle à la direction de passage (X), qui est conçu pour retenir une pièce (5) en contact, de préférence par friction, avec le convoyeur à chaîne (3), ainsi relâcher le contact entre la pièce (5) et le convoyeur à chaîne (3) et la transporter en parallèle à la direction de passage (X) en état retenu.

2. Dispositif de traitement du bois (1) selon la revendication 1, **caractérisé en ce**
**que** le moyen de retenue (4) est conçu pour soulever une pièce (5) se trouvant sur le convoyeur à chaîne (3), la retenir et la transporter en parallèle à la direction de passage (X) lorsqu'elle est retenue en place.

3. Dispositif de traitement du bois (1) selon la revendication 1 ou 2, **caractérisé en ce**
**que** le moyen de retenue (4) est conçu en outre pour rétablir le contact entre la pièce (5) retenue et le convoyeur à chaîne (3), de préférence pour déposer la pièce (5) retenue de nouveau sur le convoyeur à chaîne (3).

4. Dispositif de traitement du bois (1) selon l'une quelconque des revendications précédentes,
**caractérisé en ce**
**que** le moyen de retenue (4) comporte un chariot (41) déplaçable sur un banc de machine (7) en parallèle à la direction de passage (X).

5. Dispositif de traitement du bois (1) selon l'une quelconque des revendications précédentes,
**caractérisé en ce**
**que** le moyen de retenue (4) comporte au moins un, de préférence au moins deux, moyen(s) de préhension (42, 43), qui est/sont conçu(s) pour saisir une pièce (5) en contact avec le convoyeur à chaîne (3), de préférence se trouvant sur le convoyeur à chaîne (3), et qui sont déplaçables en parallèle à une direction verticale (Z) perpendiculairement à la direction de passage (X), pour relâcher une pièce (5) saisie du contact avec le convoyeur à chaîne (3), de préférence la soulever, et/ou la mettre de nouveau en contact avec le convoyeur à chaîne (3), de préférence la placer sur le convoyeur à chaîne (3).

6. Dispositif de traitement du bois (1) selon la revendication 5,
**caractérisé en ce**
**que** l'au moins un moyen de préhension (42, 43) comporte au moins deux mâchoires de serrage (42a, 42b; 43a, 43b) pour prendre appui au côté supérieur et/ou au côté inférieur de la pièce (5).

7. Dispositif de traitement du bois (1) selon la revendication 4 et une des revendications 5 ou 6,
**caractérisé en ce**
**que** l'au moins un moyen de préhension (42, 43) est monté au chariot (41).

8. Dispositif de traitement du bois (1) selon l'une quelconque des revendications précédentes,
**caractérisé en ce**
**que** l'unité de traitement (6) est déplaçable dans au moins deux directions spatiales (X, Y), de préférence dans trois directions spatiales (X, Y, Z).

9. Procédé dans lequel, de préférence des pièces en forme de plaque (5) en bois ou produits de substitution du bois, sont traitées, de préférence usinées par enlèvement, pendant le passage dans une direction de passage (X), par l'intermédiaire d'une unité de traitement (6) se déplaçant avec la pièce (5) en parallèle à la direction de passage (X), dans lequel surtout un dispositif de traitement du bois (1) selon l'une quelconque des revendications précédentes est utilisé et dans lequel les étapes suivantes sont réalisées,
a) mise en contact, de préférence dépose, d'une pièce (5) à traiter avec le convoyeur à chaîne (3) d'un appareil de traitement en continu et transport de la pièce (5) sur le convoyeur à chaîne (3) dans la direction de passage (X), dans lequel un moyen de pression supérieure (2) presse la pièce (5) sur le convoyeur à chaîne (3);
b) retenue de la pièce (5) par l'intermédiaire d'un moyen de retenue (4);
c) relâchement du contact de la pièce (5) avec le convoyeur à chaîne (3) de sorte que la pièce (5) retenue n'est plus en contact avec celui-ci, de préférence ne repose plus sur le convoyeur à chaîne (3);
d) transport de la pièce (5) en parallèle et surtout synchrone au déplacement du convoyeur à chaîne (3) dans la direction de passage (X) et traitement simultané de la pièce (5) par l'unité de traitement (6) se déplaçant en parallèle à la direction de passage (X), surtout synchrone avec la pièce (5).

10. Procédé selon la revendication 9,
**caractérisé en ce**
**qu'**après l'étape d), le contact entre le convoyeur à chaîne (3) et la pièce (5) est rétabli, de préférence que la pièce (5) est placée de nouveau du moyen de retenue (4) au convoyeur à chaîne (3).
